# EUROPEAN PATENT APPLICATION

(11) **EP 0 684 534 A1**
(43) Date of publication of application: **29.11.1995**
(21) Application number: 95303621.7
(22) Date of filing: 26.05.1995
(51) Int. Cl.: G05B 21/02, H02P 5/50

(54) **Adaptive control systems**

(30) Priority: 28.05.1994 GB 9410797
(71) Applicant: MMS SPACE SYSTEMS LIMITED, Portsmouth, Hampshire PO3 5PU (GB)
(72) Inventor: Tichborne, Franklin George, Whitchurch, Avon BS14 0BX (GB)
(74) Representative: Waters, Jeffrey

(57) **Abstract**

An adaptive control system for a control loop subject to a cyclical or at least partially predictable error includes storage means for storing a plurality of data samples at predetermined intervals representing a model of the system error over at least part of a cycle or said predictable portion, and means for determining the sign of the system error at intervals corresponding to said predermined intervals, and for incrementing or decrementing the value of the respective data samples accordingly.

## Description

This invention relates to adaptive control systems for control loops where the system error is generally cyclical or at least partially predictable as a function of time or another parameter.

In a conventional feedback loop, the input demand is compared with the actual output to obtain a difference or error signal which is used to allow correcting action to be taken. By their nature, feedback systems do not predict or anticipate the likely error but merely react to its presence. Many systems are cyclical in operation, for example, refrigeration equipment, scanning mechanisms and many other controlled systems, whether electromechanical, electronic or other type, and in these systems, the error waveform is similar from cycle to cycle. The repeating nature of the errors may be used to build up a feed-forward compensation term which effectively anticipates the likely error before it occurs and takes correcting action using historical data.

WO93/24871 discloses an adaptive feed-forward scheme which divides the error measured during a cycle into an equal number of segments and enters the segments in a store. Thus, the store gradually accumulates a model of the error waveform. In this system, for each segment, the digital value of the segment of the actual error is added to the prestored digital value, and so the system requires analogue to digital and digital to analogue converters with good linearity, low offset and knowledge of the total gain around the loop in order to store the correct error.

We have designed a system which is robust and simple, providing adaptive and predictive error corrections, and which does not place high constraints on the A to D and D to A converters; in fact no knowledge of the loop gain is necessary.

Accordingly, in one aspect, this invention provides an adaptive control system for a control loop subject to a cyclical or at least partially predictable error, including store means for storing a plurality of data samples at predetermined intervals representing a model of the system error over at least part of a cycle or said predictable portion, and means for determining the sign of the system error at intervals corresponding to said predetermined intervals, and for incrementing or decrementing the value of the respective data samples accordingly.

This system may be used in many types of control systems where the error signal is cyclical or otherwise predictable. Thus it may be used for refrigeration equipment to reduce vibration levels of out-of-phase motors, for scanning mechanisms, to ensure correct scanning profiles, for brushless dc motors to reduce cogging errors, and for many other applications. Whilst in many applications the error signal may be sampled at regular time intervals, other parameters could be used, for example, the output shaft angular position in a D.C. motor.

The invention also extends to a method for incrementally tuning or modifying a drive waveform to a desired shape such as a sinewave, a polynomial or a discontinuous scanning profile, by sensing the waveform error and then applying a correction to the main input drive until the error at the drive output is minimised.

Whilst the invention has been described above, it extends to any inventive combination of the features set out in this specification.

The invention may be performed in various ways and an embodiment thereof will now be described by way of example only, reference being made to the accompanying drawings, in which:-
Figure 1 is a block diagram of equipment including two controlled contra-moving mechanisms and which incorporates an adaptive control system in accordance with this invention.
Figure 2 is a block diagram of the adaptive control circuit used in the system of Figure 1, and
Figures 3(a) to (f) are traces showing the demand signal, the amplified vibration error, and the error histogram after one, two, three and four cycles respectively.

The example of the system to be described below is used to model and cancel the cyclical errors in equipment driven by two electric motors. The system errors are largely predictable due to the cyclical operation, as at steady state, the errors in one cycle or revolution of the motor will be repeated in similar form in the next cycle. The system builds up a time-sliced histogram map of the cyclical errors by using a comparison method to monitor for each time slice, whether the measured system error is positive or negative and incrementing or decrementing the corresponding element in the histogram model accordingly.

The histogram model may be thought of as being made up of thousands of counters, one for each time interval or time slice, in which, at each time interval during a cycle, the individual counter is either incremented or decremented according to the sensed error. In practice this may be achieved simply in digital electronics using a Static Random Access Memory (SRAM) with a shared two's complement adder for incrementing and decrementing the digital values at the stored locations in the SRAM.

At each time interval or time slice, the digital value from the corresponding location of the SRAM is read out and applied using a Digital to Analogue converter as a feed forward component. The error sign of the system is sensed and latched and the digital value incremented or decremented as appropriate before being re-written to the same memory location for the next cycle.

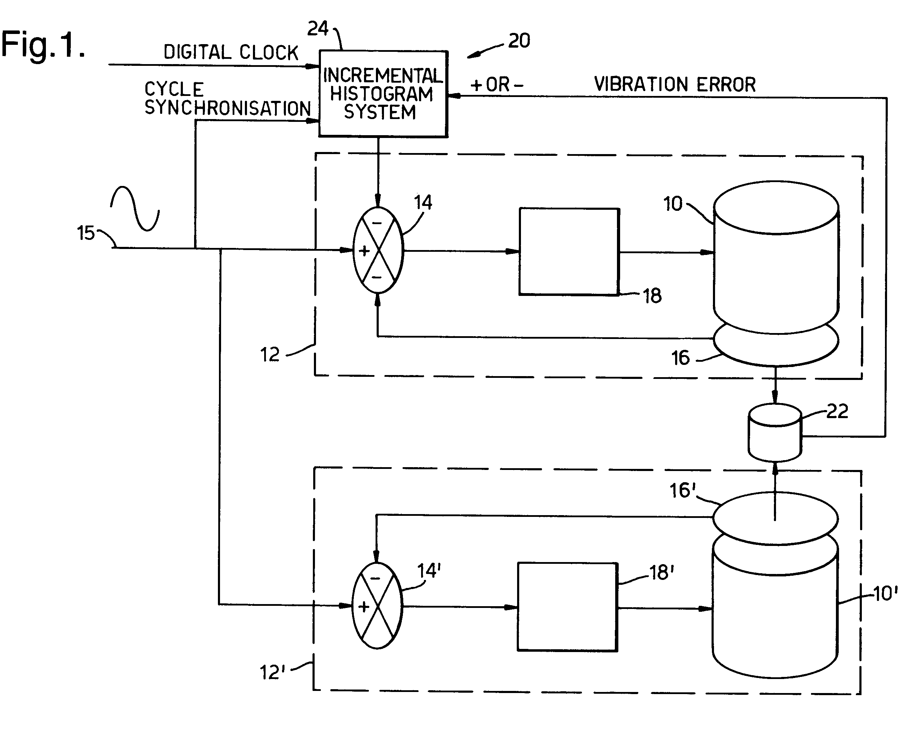

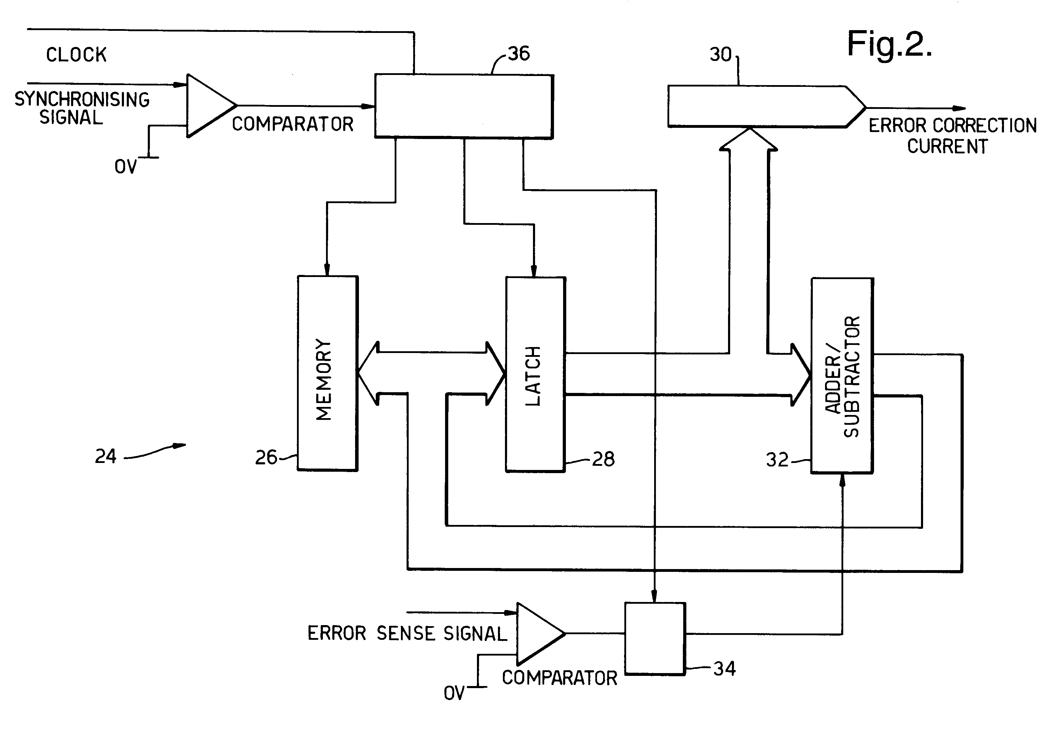

Referring specifically to Figure 1, the example of equipment illustrated comprises two contra-moving mechanisms 10,10' each with a respective feedback control loop 12,12'. In each control loop, the input position demand signal applied at 15 is supplied to a summing junction 14,14' together with a feedback term sensed by a position sensor 16,16' to obtain an error signal which is processed by the drive circuitry 18,18' and fed to the respective mechanism 10,10'. Thus far, the illustrated equipment is generally conventional. The equipment is modified to provide an adaptive feed-forward system 20 which provides a correction term derived by monitoring the residual system error using a vibration sensor 22, which senses the vibrations in one dimension. The sensor output signal is processed to obtain a digital histogram model of the residual error. The feed-forward system 20 modifies the drive signals to the mechanism 10 by a small amount to cancel out or reduce the dual mechanism (vibration) error effect for the next cycle. The signal detected by the vibration sensor 22 is fed to an adaptive control circuit 24 which is shown in detail in Figure 2. The control circuit also receives a cycle synchronisation signal (here simply the input position demand signal) and a digital clock signal, and feeds the appropriate analogue signal for the current time slice to the summing junction 14.

Referring to Figure 2, the adaptive control circuit 24 comprises a SRAM 26 which stores a series of digital values each corresponding to a time slice and together defining a time sliced histogram map of the error over a cycle. At each time slice or interval in the cycle, the previously stored digital value read out of the SRAM 26 and latched in latch 28 for being converted into analogue form by a Digital to Analogue Converter 30. The contents of latch 28 are also passed to a shared two's complement adder 32, which also receives, via latch 34 the error sign (plus or minus). The digital value sum from adder 32 is latched into latch 28 and then read back into the appropriate location of the SRAM 26, ready for the next cycle.

A timing control 36 coordinates and synchronises reading out and storage in the SRAM 26 and operation of the latches 28 and 34, and receives a digital clock signal and a synchronising signal.

The adaptive control circuit of Figure 2 is particularly suited for embodying in an Application Specific Integrated Circuit (ASIC) since it contains a high function to pin out ratio, needing only four active terminals plus power and ground, as follows:-
- error sign sense input
- feed forward error cancellation output
- digital synchronising clock
- waveform synchronising signal (may be the demand signal)
- O volts, ±15 volts

The time slicing frequency is selected to be at least twice the maximum harmonic to be cancelled, in order to satisfy the Nyquist criteria. The series of digital values stored in the SRAM and making up the histogram map are initially set to a value which equals to a zero output, for initial application as a feed forward cancellation signal. (For two's complement arithmetic this would normally be 10000..00, i.e. the most significant bit 1 and all lesser bits O).

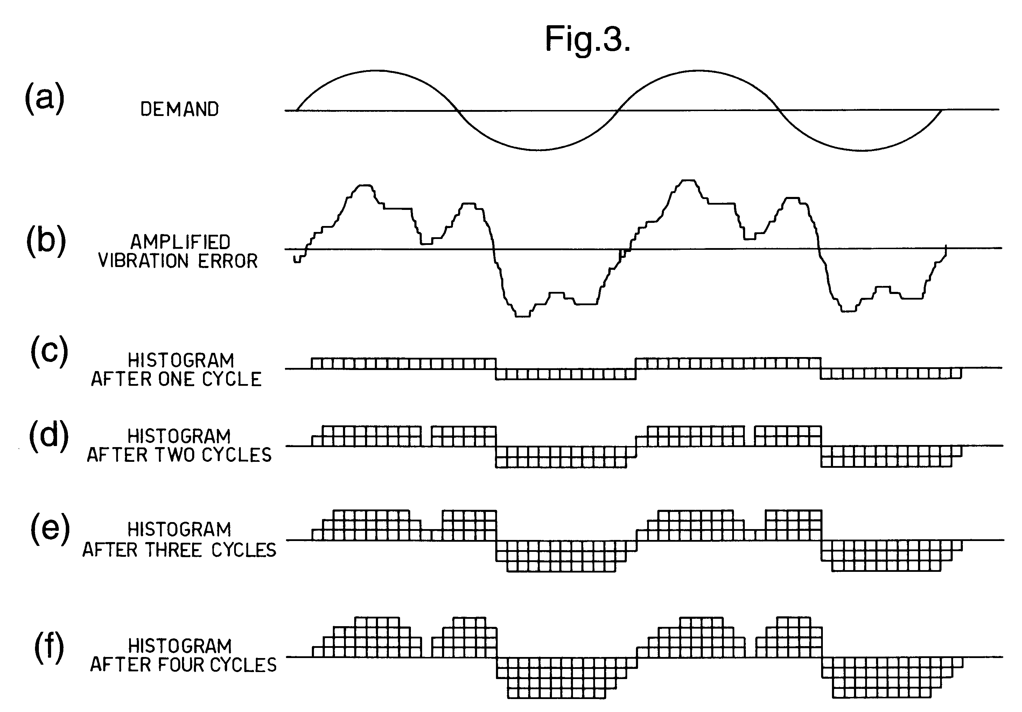

Figures 3(a) to (f) show how the histogram map builds up to equal the shape of the error. Note any offsets or gain errors around the loop are automatically removed by this incremental approach, and hence the Digital to Analogue converter required to convert the histogram back to an analogue error cancellation signal is not required to be linear or have a low offset. It should be monotonic, with good resolution, and sufficient range to cover the expected range of errors. In addition, since the error histogram builds up incrementally, the error does not need to be accurately measured for the cancellation process. The histogram reaches a steady state only when the error is exactly cancelled, this state being characterised by the least significant bit of the individual histogram counters toggling up and down on alternate cycles.

The advantages of the illustrated system over other error cancellation methods is that analysis of the error signal, such as Fast Fourier Transform (FFT), is not required and so there is no need for software. Also error signal smoothing is not necessary since any noise can only affect the least significant bit of each histogram counter, and only if that noise has a bias over many cycles will it affect the histogram map. The system also tracks accurately any long term drifts in a balanced system, for example uneven wear/friction in one or other of the two balanced mechanisms, or uneven temperature effects in either the mechanisms or their drive electronics.

The system may be implemented in software where all or part of a control system is performed by a microprocessor or microcontroller under the influence of a software system.

The system is seen to be an improvement upon error measurement schemes, since it is wholly adaptive to system gain and offset drifts and errors, not needing accurate measurement techniques, and furthermore having an error sensing resolution only limited by the hysteresis of the input comparator.

The described arrangement embodies a control system in which a demand profile is incrementally modified following sensing of the sign of the output error produced by the previous profile.

## Claims

1. An adaptive control system for a control loop subject to a cyclical or at least partially predictable error, including storage means for storing a plurality of data samples at predetermined intervals representing a model of the system error over at least part of a cycle or said predictable portion, and means for determining the sign of the system error at intervals corresponding to said predetermined intervals, and for incrementing or decrementing the value of the respective data samples accordingly.

2. An adaptive control system according to Claim 1, wherein said model of the system error is used as a feed forward cancellation term to reduce system error in subsequent cycles.

3. An adaptive control system according to Claim 1 and Claim 2, wherein the demand signal to said control loop is used to synchronise operation of said means for storing.

4. An adaptive control system according to any preceding Claims, wherein substantially complete matching of the model of the system error to the actual error is determined by monitoring the sign of the error and toggling the least significant bits of error histogram.

5. An adaptive control system according to any preceding Claims, wherein said store means comprises a Random Access Memory.

6. An adaptive control system according to any preceding Claim, wherein signed values of said system error are stored in two's complement form, and said means for decrementing comprises a two's complement adder.

7. An adaptive control system according to any preceding Claim, wherein said predetermined intervals are substantially equal time slices, determined by a reference digital clock.
